# EUROPEAN PATENT APPLICATION

(11) **EP 4 815 105 A1**
(43) Date of publication of application: **30.09.2026**
(21) Application number: 24893249.3
(22) Date of filing: 07.11.2024
(51) Int. Cl.: H01M 10/613

(54) **BATTERY PACK**

(30) Priority: 24.11.2023 CN 202323186104 U
(71) Applicant: Zhuhai Cosmx Power Co., Ltd., Zhuhai, Guangdong 519180 (CN)
(72) Inventor: YAO, Jibing, Zhuhai, Guangdong 519180 (CN); WANG, Yanqing, Zhuhai, Guangdong 519180 (CN)
(74) Representative: Murgitroyd & Company
(86) International application number: PCT/CN2024/130405
(87) International publication number: WO 2025/108091

(57) **Abstract**

The present application discloses a battery pack including: a lower housing, formed with a heat dissipation portion; a battery cell module, disposed inside the lower housing; and a thermally conductive assembly, including a thermally conductive flexible member, where the thermally conductive flexible member is thermally conductively connected to the battery cell module and abuts against the heat dissipation portion. In the battery pack according to the present application, the thermally conductive assembly includes a thermally conductive flexible member which is thermally conductively connected to the battery cell module, so that the heat generated by the battery cell module can be rapidly conducted to the thermally conductive flexible member. Moreover, the thermally conductive flexible member is elastically deformable and can make good contact with the heat dissipation portion of the lower housing in an abutting manner, ensuring the close contact between the thermally conductive flexible member and the heat dissipation portion, so that the heat conducted to the thermally conductive flexible member can be reliably transferred to the heat dissipation portion and ultimately rapidly dissipated outside the lower housing.

## Description

### TECHNICAL FIELD

The present application relates to the technical field of battery packs, and in particular to a battery pack.

### BACKGROUND

Electronic terminal products, such as unmanned aerial vehicles, vacuum cleaners and power tools, have high power demands. During startup operations (such as takeoff, landing, hovering, acceleration, and deceleration), lithium-ion batteries need to be discharged at a high rate. The discharge process releases a large amount of heat, causing the batteries to heat up. High temperature will seriously affect the performance, life and safety of batteries. Moreover, the electronic terminal products are compact in structure and are sensitive to energy and weight, making it difficult to directly apply fan cooling, water cooling and other commonly used methods. Therefore, it is necessary to implement targeted heat dissipation design for the lithium-ion batteries in the electronic terminal products to improve the stability of the electronic terminal products.

### SUMMARY

In view of this, the present application provides a battery pack, aiming to solve the problem that thermally conductive assemblies of battery packs have complex structures and are heavy and bulky, making it difficult to directly apply to battery packs of electronic terminal products of different types and application scenarios.

To achieve the above objective, the present application provides the following technical solution.

A battery pack includes: a lower housing, formed with a heat dissipation portion; a battery cell module, disposed inside the lower housing; and a thermally conductive assembly, including a thermally conductive flexible member, where the thermally conductive flexible member is thermally conductively connected to the battery cell module and abuts against the heat dissipation portion.

In the battery pack according to the present application, a thermally conductive assembly is provided. The thermally conductive assembly includes a thermally conductive flexible member that is elastically deformable. On the one hand, the thermally conductive flexible member is thermally conductively connected to the battery cell module, so that the heat generated by the battery cell module can be rapidly conducted to the thermally conductive flexible member. On the other hand, the thermally conductive flexible member is elastically deformable and can make full contact with the heat dissipation portion of the lower housing in an abutting manner, ensuring the close contact between the thermally conductive flexible member and the heat dissipation portion, so that the heat conducted to the thermally conductive flexible member can be reliably transferred to the heat dissipation portion and ultimately dissipated outside the lower housing, which enables rapid dissipation of heat from the inside of the battery pack and thus prevents safety issues caused by high temperature of the battery pack during charging and discharging. Moreover, the thermally conductive assembly in the present application has a simple and compact structure, is assembled in close fit with the battery cell module and the heat dissipation portion of the lower housing, is lightweight and small in size, and can be directly applied to battery packs of electronic terminal products of different types and application scenarios, thereby effectively improving the stability of the electronic terminal products.

### BRIEF DESCRIPTION OF THE DRAWINGS

To describe technical solutions in embodiments of the present application or in the related art more clearly, the following briefly describes the drawings needed for describing the embodiments or the related art. It is clear that the drawings in the following descriptions are merely part of embodiments of the present application, and a person of ordinary skill in the art may still derive other drawings from the provided drawings without creative efforts.
FIG. 1 is an exploded view of a battery pack according to the present application.
FIG. 2 is a schematic structural diagram of the battery pack according to the present application.
FIG. 3 is a side view of the battery pack according to the present application.
FIG. 4 is a cross-sectional view of FIG. 3 taken along line V-V.
FIG. 5 is a schematic structural diagram showing the heat dissipation and transfer of the battery pack according to the present application.
FIG. 6 is a schematic structural diagram of a thermally conductive connector according to the present application.
FIG. 7 is a schematic structural diagram of a thermally conductive flexible member according to the present application.
FIG. 8 is a cross-sectional view of the thermally conductive flexible member according to the present application.
FIG. 9 is a front view of a heat dissipation portion according to the present application.
FIG. 10 is a top view of the heat dissipation portion according to the present application.
FIG. 11 is a schematic structural diagram of a heating element according to the present application.
FIG. 12 shows a folded heating element according to the present application.
FIG. 13 is a schematic structural diagram of a heating core inside the heating element according to the present application.
FIG. 14 is a schematic structural diagram of the heating element with an adhesive member on a front side according to the present application.
FIG. 15 is a schematic structural diagram of the heating element with an adhesive member on a back side according to the present application.
FIGS. 16 to 25 are first to tenth schematic diagrams of steps for the assembly of the heating element, the thermally conductive connector, and cells according to the present application.
FIG. 26 is a schematic diagram for the assembly of a battery pack core unit semi-finished product with a tab welding plate and tab isolation foam according to the present application.
FIG. 27 is a schematic diagram for the assembly of the assembled structure in FIG. 26 with a control circuit board, wires, and a connector terminal according to the present application.
FIG. 28 is a schematic diagram for the assembly of the assembled structure in FIG. 27 with auxiliary foam assembly according to the present application.
FIG. 29 is a schematic diagram for the assembly of a battery cell core unit with an upper housing and a lower housing according to the present application.
FIG. 30 is an exploded view of the battery pack according to the present application in another state.

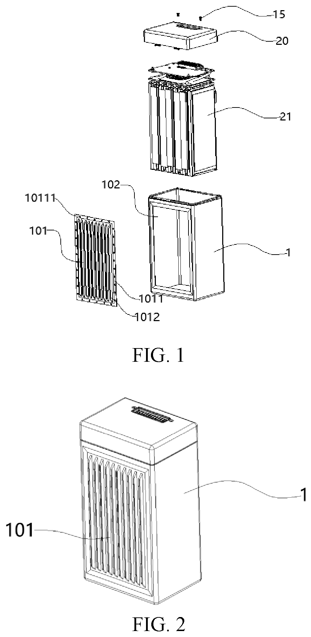

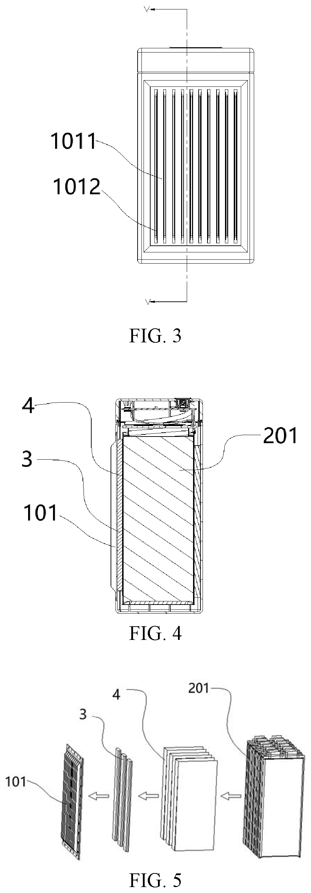

In FIGS. 1 to 30:

1. Lower housing; 2. Battery cell module; 3. Thermally conductive flexible member; 4. Thermally conductive connector; 5. Heating element; 6. Tab welding plate; 7. Control circuit board; 8. Tab isolation foam; 9. Insulation sheet; 10. Positive wire; 11. Negative wire; 12. Signal cable; 13. Connector terminal; 14. Control circuit board screw; 15. Connector terminal screw; 16. Rear auxiliary foam; 17. Left auxiliary foam; 18. Right auxiliary foam; 19. Bottom auxiliary foam; 20. Upper housing; 21. Battery pack core unit semi-finished product; 22. Battery pack core unit; 101. Heat dissipation portion; 102. Mounting opening; 201. Cell; 202. Battery cell isolation foam; 501. Heating zone; 502. Connection zone; 503. Insulation coating layer; 504. heating core; 505. Electrical connector; 506. Temperature switch; 507. Adhesive member; 601. Guide hole; 1011. Body; 1012. Heat dissipation fin; 301. Thermally conductive coating layer; 302. Thermally conductive flexible core; 303. Second thermally conductive adhesive layer; 401. Abutting portion; 402. First portion; 403. Second portion; 404. First thermally conductive adhesive layer; 5017. First positioning hole; 5026. Through hole; 5041. Electrical connection end; 10111. Second positioning hole; 2011. First cell; 2012. Second cell; 2013. Third cell; 2014. Fourth cell; 2015. Fifth cell; 2016. Sixth cell; 2017. Seventh cell; 2018. Eighth cell; 2019. Ninth cell; 20110. Tenth cell; 20111. Eleventh cell; 20112. Twelfth cell; 4011. First thermally conductive connector; 4012. Second thermally conductive connector; 4013. Third thermally conductive connector; 5011. First heating zone; 5012. Second heating zone; 5013. Third heating zone; 5014. Fourth heating zone; 5015. Fifth heating zone; 5016. Sixth heating zone; 5021. First connection zone; 5022. Second connection zone; 5023. Third connection zone; 5024. Fourth connection zone; 5025. Fifth connection zone.

### DETAILED DESCRIPTION OF THE EMBODIMENTS

In order to make the objectives, technical solutions, and advantages of the embodiments of the present utility model clearer, the technical solutions in the embodiments of the present utility model are clearly and completely described below with reference to the accompanying drawings in the embodiments of the present utility model. Obviously, the described embodiments are a part, rather than all of the embodiments of the present utility model. All other embodiments obtained by a person of ordinary skill in the art based on the embodiments of the present utility model without creative efforts shall fall within the protection scope of the present utility model. In the case of no conflict, the following embodiments and features in the embodiments may be combined with each other.

The present application provides a battery pack.

Technical solutions in embodiments of the present application are clearly and completely described below with reference to the drawings in the embodiments of the present application. Apparently, the embodiments described are merely part rather than all of the embodiments of the present application. All other embodiments obtained by a person of ordinary skill in the art based on the embodiments of the present application without creative efforts shall fall within the scope of protection of the present application.

As shown in FIGS. 1 to 30, a battery pack includes a lower housing 1, a battery cell module 2, and a thermally conductive assembly. The lower housing 1 is formed with a heat dissipation portion 101. The battery cell module 2 is disposed inside the lower housing 1. The thermally conductive assembly includes a thermally conductive flexible member 3. The thermally conductive flexible member 3 is thermally conductively connected to the battery cell module 2 and abuts against the heat dissipation portion 101.

By providing the thermally conductive flexible member 3, on the one hand, the thermally conductive flexible member 3 is thermally conductively connected to the battery cell module 2, so that the heat generated by the battery cell module 2 can be rapidly conducted to the thermally conductive flexible member 3; and on the other hand, the thermally conductive flexible member 3 is elastically deformable and can make good contact with the heat dissipation portion 101 of the lower housing 1 in an abutting manner, ensuring the close contact between the thermally conductive flexible member 3 and the heat dissipation portion 101, so that the heat conducted to the thermally conductive flexible member 3 can be reliably transferred to the heat dissipation portion 101 and ultimately dissipated outside the lower housing, which enables rapid dissipation of heat from the inside of the battery pack and thus prevents safety issues caused by high temperature of the battery pack during charging and discharging.

Further, the thermally conductive assembly in the present application has a simple and compact structure, is assembled in close fit with the heat dissipation portion 101 of the battery cell module 2 and the lower housing 1, is lightweight and small in size, and can be directly applied to battery packs of electronic terminal products of different types and application scenarios, thereby effectively improving the stability of the electronic terminal products.

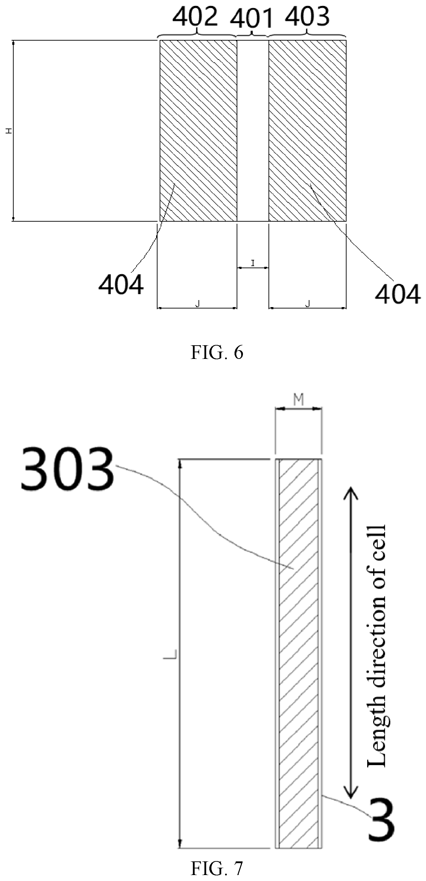

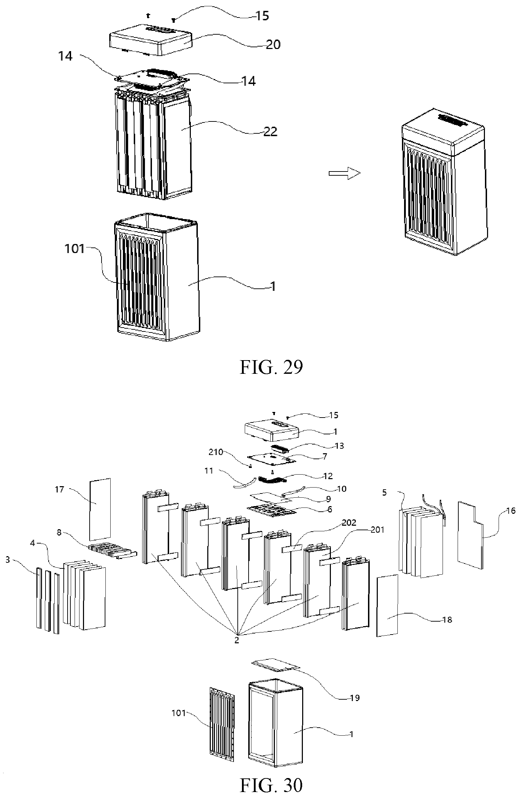

Referring to FIGS. 6 and 30, in some embodiments of the present application, the battery cell module 2 includes a plurality of cells 201 arranged in sequence. The thermally conductive assembly includes a thermally conductive connector 4. The thermally conductive connector 4 wraps around the cells 201. The thermally conductive connector 4 includes an abutting portion 401. The abutting portion 401 is parallel to a direction in which the cells 201 are arranged in sequence. The thermally conductive flexible member 3 is disposed between the abutting portion 401 and the heat dissipation portion 101 and abuts against each of the abutting portion 401 and the heat dissipation portion 101.

It should be noted that the thermally conductive connector 4 wraps around at least part of the cells 201; and along the direction in which the cells 201 are arranged in sequence, a plurality of thermally conductive connectors 4 are arranged in sequence. Correspondingly, the thermally conductive flexible member 3 has certain dimensions, so that by providing only one thermally conductive flexible member 3, it is possible to ensure that the abutting portion 401 of each thermally conductive connector 4 abuts against the thermally conductive flexible member 3. Alternatively, the number of the thermally conductive flexible members 3 is the same as the number of the thermally conductive connectors 4, and the abutting portion 401 of each thermally conductive connector 4 abuts against the thermally conductive flexible member 3 that is at a position opposite the abutting portion.

The thermally conductive connector 4 wraps around the cells 201, so that the thermally conductive connector 4 and the cells 201 are connected in a thermally conductive manner, and are connected in close fit and assembled conveniently and rapidly, ensuring that the thermally conductive connector 4 does not occupy a large volume of the battery pack.

There is a clearance distance between the heat dissipation portion 101 of the lower housing 1 and the thermally conductive connector 4. Since the thermally conductive flexible member 3 has a certain flexibility, the interference fit of the thermally conductive flexible member 3 within the above clearance distance can be achieved by controlling the thickness of the thermally conductive flexible member 3 to be greater than the above clearance distance, which not only achieves the convenient and rapid assembly, but also achieves a close-fit connection effect between the thermally conductive flexible member 3 and the heat dissipation portion 101 of the lower housing 1 at the abutting portion 401 of the thermally conductive connector 4.

The thermally conductive connector 4 is wrapped between the cells 201, so that the heat generated by the cells 201 is conducted to the thermally conductive connector 4. The thermally conductive flexible member 3 abuts against the thermally conductive connector 4, so that the heat from the thermally conductive connector 4 can be conducted to the thermally conductive flexible member 3. Moreover, the thermally conductive flexible member 3 abuts against the heat dissipation portion 101, so that the heat from the thermally conductive flexible member 3 is conducted to the heat dissipation portion 101. Finally, the heat is transferred to the outside of the lower housing 1 by means of the heat dissipation portion 101 through external air convection, thermal radiation, etc. to ultimately achieve rapid reduction of the internal temperature of the battery pack.

Referring to FIG. 6, in some embodiments of the present application, the thermally conductive connector 4 includes a first portion 402, an abutting portion 401 and a second portion 403 which are integrally connected. The first portion 402 and the second portion 403 are arranged perpendicular to the direction in which the cells 201 are arranged in sequence. The first portion 402, the abutting portion 401 and the second portion 403 enclose an accommodating space. The cells 201 are disposed in the accommodating space.

It should be noted that the thermally conductive connector 4 is selected to be of a foldable sheet structure, and is folded when assembled with the cells 201.

An edge of the abutting portion 401 adjacent to the first portion 402 is a first fold line. An edge of the second portion 403 adjacent to the abutting portion 401 is a second fold line.

At least one cell 201 is stacked on the first portion 402; and then the thermally conductive connector 4 is folded along the first fold line and the second fold line to fold the second portion 403 back over the cell 201.

In this case, the first portion 402, the abutting portion 401 and the second portion 403 form a U-shaped folded structure, and the cell 201 is located in the accommodating space enclosed by the U-shaped folded structure, so that the cell 201 is wrapped by the thermally conductive connector 4, enabling convenient and rapid connection between the cell 201 and the thermally conductive connector 4 in a thermally conductive manner.

Referring to FIG. 6, in some embodiments of the present application, a first thermally conductive adhesive layer 404 is provided on each of the first portion 402 and the second portion 403.

It should be noted that either thermally conductive double-sided adhesive or thermally conductive hot melt adhesive may be selected as the first thermally conductive adhesive layer 404.

By providing the first thermally conductive adhesive layer 404 on each of the first portion 402 and the second portion 403, the first portion 402 is in a full and close fit with the cell 201, and the second portion 403 is a full and close fit with the cell 201, enabling a fixed connection between the thermally conductive connector 4 and the cell 201; and the heat from the cell 201 can be rapidly and completely conducted to the thermally conductive connector 4 on the basis of the excellent heat conduction capacity of the first thermally conductive adhesive layer 404.

Further, the thermally conductive connector 4 is a graphite sheet. The graphite sheet has a thickness dimension ranging from 0.1 mm to 1.0 mm.

Referring to FIG. 6, it should be noted that a length dimension H of the graphite sheet does not exceed a length dimension of the cell 201.

The thickness dimension of the graphite sheet is correlated with the required thermal conductivity. The thicker the graphite sheet, the better the thermal conductivity.

A width dimension J of the first portion 402 or the second portion 403 of the graphite sheet that requires adhesive backing does not exceed a width dimension of the cell 201.

A width dimension I of the abutting portion 401 of the graphite sheet that does not require adhesive backing is correlated with a sum of thickness dimensions of all the cells 201 that the graphite sheet can wrap. For example, in some embodiments, each graphite sheet wraps around two cells 201, and a layer of battery cell isolation foam 202 is provided between the two cells 201, so that I is greater than or equal to the sum of the thickness dimensions of the two cells 201 and the thickness dimension of the battery cell isolation foam 202.

It should be further noted that the thermally conductive connector 4 may also be made of another high thermal conductivity material in addition to the graphite sheet.

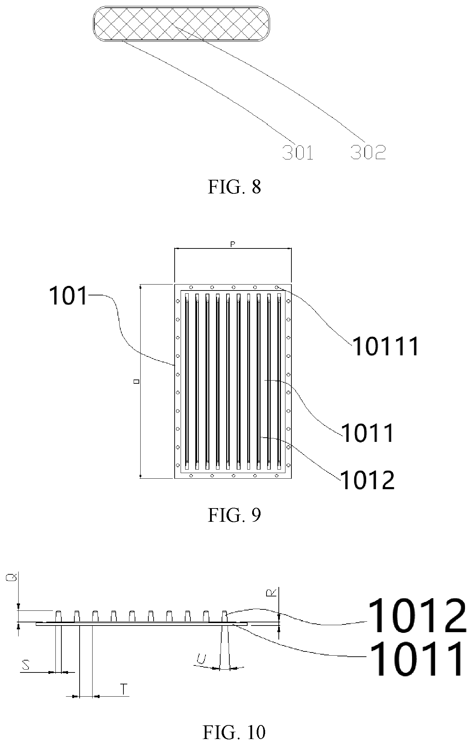

Referring to FIG. 8, in some embodiments of the present application, the thermally conductive flexible member 3 includes a thermally conductive coating layer 301 and a thermally conductive flexible core 302 disposed inside the thermally conductive coating layer 301.

In the present application, the thermally conductive flexible member 3 has a simple structure; the thermally conductive coating layer 301 increases the strength of an outer surface of the thermally conductive flexible member 3; and the thermally conductive flexible core 302 enables the thermally conductive flexible member 3 to be soft and deformable.

Referring to FIG. 7, in some embodiments of the present application, a second thermally conductive adhesive layer 303 is provided on a side of the thermally conductive flexible member 3 opposite the abutting portion 401.

It should be noted that either thermally conductive double-sided adhesive or thermally conductive hot melt adhesive may be used as the second thermally conductive adhesive layer 303.

By providing the second thermally conductive adhesive layer 303 on the thermally conductive flexible member 3, the thermally conductive flexible member 3 is in a full and close fit with the abutting portion 401 of the thermally conductive connector 4, enabling a fixed connection between the thermally conductive flexible member 3 and the thermally conductive connector 4; and the heat from the thermally conductive connector 4 can be rapidly and completely conducted to the thermally conductive flexible member 3 on the basis of the excellent heat conduction capacity of the second thermally conductive adhesive layer 303.

Further, graphite foam is selected as the thermally conductive flexible member 3. In this case, the thermally conductive coating layer 301 is a graphite sheet coating layer, and the thermally conductive flexible core 302 is thermally conductive foam. PU foam is selected as the thermally conductive foam.

Referring to FIGS. 7 and 8, it should be noted that a length of the graphite sheet coating layer is slightly greater than or equal to a length of the thermally conductive foam along a length direction of the cell, so that the thermally conductive foam can be completely coated with the graphite sheet coating layer. In addition, the thermally conductive foam can be coated with the graphite sheet coating layer for at least one circle along a circumference of the thermally conductive foam. The graphite sheet coating layer has a thickness of 0.1 mm. A thickness of the thermally conductive foam is positively correlated with a clearance distance between the heat dissipation portion 101 and the abutting portion 401 of the graphite sheet.

The length direction of the cell is indicated by the arrow in FIG. 7.

A length dimension L of the graphite foam does not exceed the length dimension of the cell along the length direction of the cell. A ratio of a length of the graphite foam to the length dimension of the cell ranges from 1/6 to 11/12.

A width dimension M of the graphite foam is greater than or equal to the width dimension I of the thermally conductive connector 4.

The assembled structure of the battery cell module 2 and the thermally conductive connector 4 is a battery pack core unit semi-finished product 21. A thickness dimension of the graphite foam is correlated with the clearance distance between the heat dissipation portion 101 and the abutting portion 401 of the graphite sheet after the battery pack core unit semi-finished product is mounted into the lower housing 1. The thickness dimension of the graphite foam is generally greater than this clearance distance. That is, an interference fit is used to enable the graphite foam to be tightly connected between the graphite sheet and the heat dissipation portion 101.

Further, the thermally conductive coating layer 301 and the thermally conductive flexible core 302 are connected and fixed by means of a third thermally conductive adhesive layer.

Specifically, the thermally conductive flexible core 302 is circumferentially coated with a third thermally conductive adhesive layer; and the thermally conductive coating layer 301 is bonded to the third thermally conductive adhesive layer. The third thermally conductive adhesive layer has a coating thickness ranging from 0.05 mm to 1 mm.

It should be noted that the third thermally conductive adhesive layer is made of thermally conductive hot melt adhesive.

Defining a thickness of the thermally conductive hot melt adhesive within the above range can ensure the graphite sheet coating layer to be reliably fixed to the thermally conductive foam, avoid waste of the thermally conductive hot melt adhesive, and effectively ensure the heat conduction and transfer effect of the graphite foam.

In this case, the thermally conductive coating layer 301 and the thermally conductive flexible core 302 are integrally connected, ensuring that the structure of the thermally conductive flexible member 3 is more stable and reliable during the operation of the battery pack.

Further, the use of graphite foam as the thermally conductive flexible member 3 is only an example of heat transfer in an embodiment of the present application. In addition to the graphite foam used in the solution of this example, other high thermal conductivity materials, such as a high thermal conductivity silicone sheet, thermally conductive sealant, thermally conductive double-sided adhesive, a phase-change thermally conductive material, thermally conductive adhesive, and thermally conductive potting adhesive, may also be used as heat transfer media between the heat dissipation portion 101 and the thermally conductive connector 4 or the battery cell module 2.

Referring to FIGS. 1 to 3, in some embodiments of the present application, a mounting opening 102 is formed in a side wall of the lower housing 1. A heat sink is provided at the mounting opening 102. The heat sink forms the heat dissipation portion 101.

It should be noted that the heat sink is generally made of copper, aluminum, or other metals with good thermal conductivity. A surface of the heat sink is treated with acid-resistant aluminum or is anodized to increase the radiation performance and thus the heat dissipation efficiency of the heat sink. The lower housing 1 is a plastic housing, and serves as a protective unit for the battery pack. The heat sink is a heat dissipation unit of the battery pack, and the heat sink and the lower housing 1 are integrated by injection molding. The lower housing 1 is made of plastic and partially embedded with the heat sink, so that the weight of the lower housing 1 is reduced.

Referring to FIG. 9, a length dimension O of the heat sink is less than a length dimension of the lower housing 1, and a width dimension P of the heat sink is less than a width dimension of the lower housing 1. In this case, the heat sink can be placed into and integrated with the lower housing 1 by injection molding.

The heat sink and the lower housing 1 are assembled by means of an integrated in-mold injection molding process to achieve waterproofing and other IP protection requirements, and may also be assembled using hot melt adhesive, screw, glue, double-sided adhesive, etc.

Referring to FIGS. 9 and 10, in some embodiments, the heat dissipation portion 101 includes a body 1011 and a plurality of heat dissipation fins 1012 arranged in sequence on the body 1011.

Further, second positioning holes 10111 are formed in the body 1011; and the plurality of second positioning holes 10111 are arranged circumferentially along an edge of the body 1011.

Since the second positioning holes 10111 are formed in the body 1011 of the heat sink, on the one hand, the heat sink can be positioned in an injection mold of the lower housing 1; and on the other hand, the lower housing 1 obtained after injection molding and curing of the plastic of the lower housing 1 can be tightly bonded to the heat sink, which prevents disengagement of the heat sink and strengthens the firmness. The number of the second positioning holes 10111 can be increased or decreased according to the actual situation.

Referring to FIG. 10, in some embodiments of the present application, the body 1011 has a thickness dimension R greater than 1.2 mm along a direction in which the heat dissipation fin 1012 extends outward relative to the body 1011.

Further, the heat dissipation fin 1012 has a thickness dimension along a direction in which the heat dissipation fins 1012 are arranged in sequence; and the thickness dimension of the heat dissipation fin 1012 gradually decreases along the direction in which the heat dissipation fin 1012 extends outward relative to the body 1011.

In a good thickness design, the heat dissipation fin 1012 is thicker at the heat source portion and gradually thinner at the outwardly extending portion. In this case, the heat sink absorbs enough heat by the heat source portion and rapidly transfers the heat to the surrounding thinner portion.

The heat dissipation fin 1012 has a length dimension Q along the direction in which the heat dissipation fin 1012 extends outward relative to the body 1011. Q is determined depending on the required heat dissipation capacity. In general, the larger the Q, the higher the heat dissipation capacity.

Further, the thickness dimension S of the heat dissipation fin 1012 is greater than 1.5 mm along the direction in which the heat dissipation fins 1012 are arranged in sequence.

Further, an end portion of the heat dissipation fin 1012 away from the body 1011 is arc-shaped, with an arc angle U ranging from 5° to 8°.

Further, a spacing T between adjacent heat dissipation fins 1012 is greater than 4 mm along the direction in which the heat dissipation fins 1012 are arranged in sequence.

This achieves a balance between the thickness dimension R of the body 1011 and the length dimension Q of the heat dissipation fin 1012; and avoids the problem of difficulty in heat transfer at the arc-shaped end portion of the heat dissipation fin 1012 due to the heat dissipation fin 1012 having an excessively small thickness dimension S and the heat dissipation fin 1012 having an excessively large length dimension Q, thereby maximizing the heat dissipation efficiency when the heat sink has a given dimension of volume.

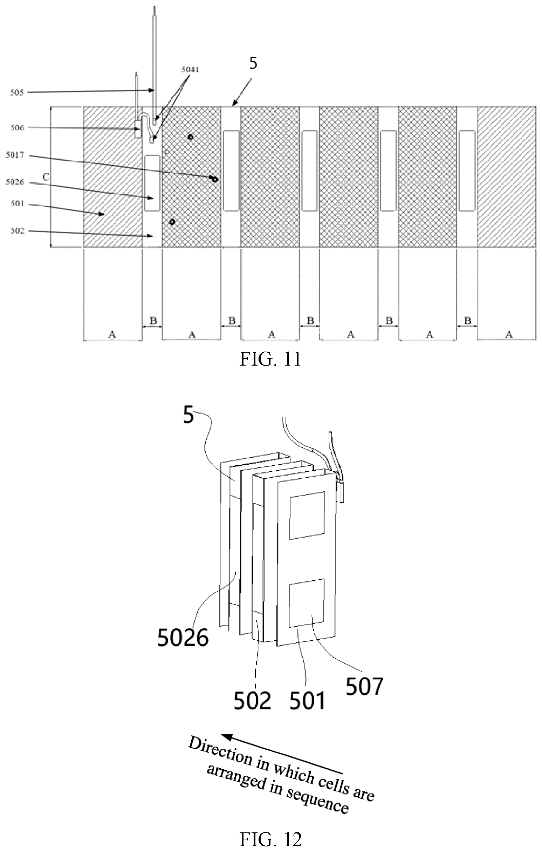

Referring to FIGS. 11 and 12, in some embodiments of the present application, the battery cell module 2 includes a plurality of cells 201 arranged in a stack. The battery pack includes a heating element 5. The heating element 5 forms a plurality of folding spaces along the direction in which the cells 201 are arranged in sequence. The plurality of cells 201 are arranged in the plurality of folding spaces.

When the battery pack is at a low temperature, the heating element 5 can generate uniform heat energy and transfer it to the cells 201, so that the battery pack is maintained within a certain suitable temperature range to enhance the reactivity of internal chemical substances of the battery pack.

Referring to FIGS. 11 and 12, in some embodiments of the present application, the heating element 5 includes a plurality of heating zones 501 arranged at intervals and a connection zone 502 located between two adjacent heating zones 501. An edge of the connection zone 502 adjacent to the heating zone 501 is a fold line. The heating element 5 is folded along the fold lines. The plurality of heating zones 501 in the folded heating element 5 are arranged in sequence along the direction in which the cells 201 are arranged, and the connection zone 502 is parallel to the direction in which the cells 201 are arranged. Through holes 5026 are formed in the heating element 5. The fold lines are located at edges of the through hole 5026 or extend through the through hole 5026.

It should be noted that the fold lines being located at the edges of the through hole 5026 or extending through the through hole 5026 means that the through hole 5026 is exactly formed in the connection zone 502, and a width of the through hole 5026 is exactly the same as a width of the connection zone 502 along a direction in which the plurality of heating zones 501 are arranged at intervals; or a region in which the through hole 5026 is formed extends beyond the connection zone 502, and two edges of the through hole 5026 are exactly located within the two heating zones 501 adjacent to the connection zone 502, respectively, that is, the width of the through hole 5026 is greater than the width of the connection zone 502 along the direction in which the plurality of heating zones 501 are arranged at intervals.

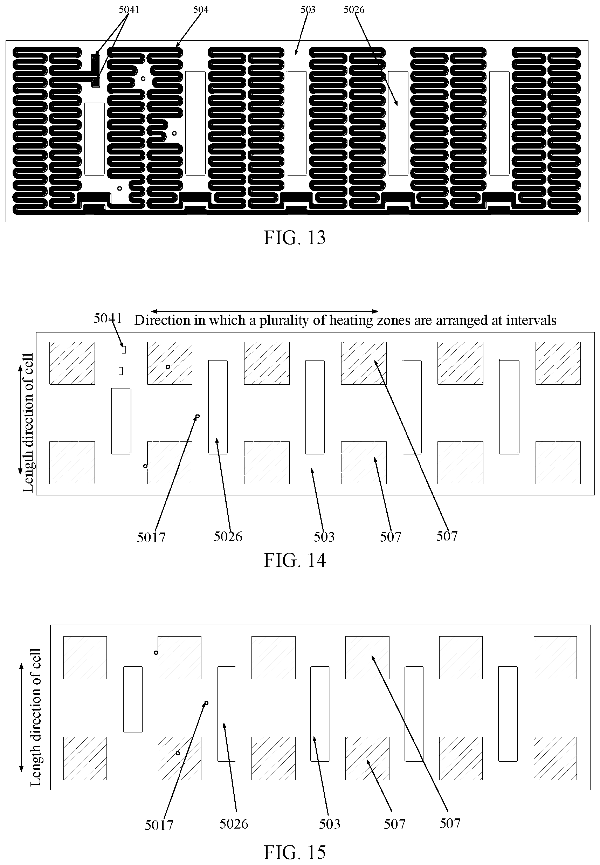

It should be further noted that the direction in which the plurality of heating zones 501 are arranged at intervals is the direction of the arrow shown in FIG. 14.

In the folded heating element 5, the connection zone 502 and two heating zones 501 adjacent to the connection zone enclose a folding space; and the heating element 5 forms a plurality of folding spaces arranged along an S-curve, specifically the heating element 5 as shown in FIGS. 12 and 30. The plurality of cells 201 are disposed in the plurality of folding spaces.

In order to ensure that each cell 201 can be in direct fit and contact with the heating zone 501, it is preferable to place one cell 201 or two cells 201 in each folding space. Further, in the folded heating element 5, cells 201 are also arranged on sides, away from the folding space, of the heating zones 501 located at both end portions.

Referring to FIG. 12, in some embodiments, a through hole 5026 is formed in the connection zone 502.

When the heating element 5 is sequentially folded along the S-curve along the fold lines of the connection zones 502, the presence of the through hole 5026 in the connection zone 502 effectively reduces the material size of the heating element 5 at the fold line and thus effectively reduces the stress of the heating film at the fold line (the fold line is a bent corner of the heating element 5), which facilitates folding and assembly to achieve the continuous bending operation of the heating element 5, and prevents the heating zone 501 from arching under this stress to ensure the fitting between the heating zone 501 and the surface of the cells 201 to enable a good transfer of heat to the cells 201. Moreover, the formed through holes 5026 reduce the weight of the heating element 5 and ensure the energy density of the battery pack.

Preferably, the through hole 5026 is formed in a central region of the connection zone 502.

This ensures the uniform force distribution on the fold lines on both sides of the connection zone 502 and thus ensures the consistency and stability of the assembly of the heating element 5 and the cells 201.

In some embodiments of the present application, the corners of the through hole 5026 are chamfered.

Further, the through hole 5026 is a rectangular through hole, and the corners of the through hole 5026 are rounded.

This avoids the disadvantage of stress concentration at the corners of the through hole 5026, and thus avoids the disadvantage of the corners of the through hole 5026 being easily torn when the heating element 5 is pulled by external force.

Referring to FIGS. 14 and 15, in some embodiments of the present application, adhesive members 507 are provided on both a front side and a back side of the heating zone 501.

It should be noted that the adhesive member 507 is double-sided adhesive bonded to the heating element 5.

The provision of double-sided adhesive can ensure the close fit of assembly and connection between the heating element 5 and the cells 201 so that the heat generated by the heating element 5 can be efficiently conducted to the cells 201, and can also make the connection of the entire battery cell module 2 more secure to strengthen the overall structure.

Further, the double-sided adhesive has a thickness ranging from 0.03 mm to 0.07 mm. Preferably, the double-sided adhesive has a thickness of 0.05 mm, or has a thickness dimension as small as possible, so that the assembled battery pack finished product is small in size and better meets the requirements of application scenarios.

Further, in addition to the double-sided adhesive, hot melt adhesive may also be used as the adhesive member 507.

Referring to FIGS. 14 and 15, further, the heating zone 501 includes a first end and a second end along the length direction of the cell 201. Double-sided adhesives are bonded respectively near the first end and near the second end of the heating zone 501, with a spacing therebetween.

This, on the one hand, can reduce the required material consumption area and thus reduce the cost; and on the other hand, can make the heating element 5 contact with the battery cell in close fit as much as possible, providing the heat conduction efficiency. After a charge-discharge cycle of the cell 201, the cell 201 expands and becomes larger, and usually the cell 201 bulges from the middle. If the double-sided adhesive is bonded at the middle position of the cell 201, the expansion of the battery pack may be affected, causing a safety risk. Therefore, the double-sided adhesive is bonded only to the two end portions of the cell 201 that are spaced apart, and its size is minimized while ensuring a tight connection.

Referring to FIG. 11, in some embodiments of the present application, a first positioning hole 5017 is formed in the heating element 5, so that when the heating element 5 is assembled with the cells 201, the first positioning hole 5017 is positioned with a positioning point of an assembly fixture.

It should be noted that the first positioning hole 5017 runs through the heating element 5; the first positioning hole 5017 is formed in the heating zone 501; and a plurality of first positioning holes 5017 are provided and form three positioning portions arranged in a triangular pattern.

Preferably, starting from a starting end of the folded heating element 5, the first of the heating zones of the heating element 5 is a first heating zone, and the second of the heating zones 501 is a second heating zone. The first positioning hole 5017 is formed in the second heating zone.

A positioning protrusion that can be adapted to the first positioning hole 5017 is formed at the positioning point of the assembly fixture. During assembly, one cell 201 is first placed on the assembly fixture; and then the first heating zone of the heating element 5 is placed on a surface of the cell 201, and the first positioning hole 5017 of the second heating zone of the heating element 5 is calibrated and aligned with the positioning point of the assembly fixture to achieve accurate placement of the heating element 5, ensuring the assembly accuracy between the heating element 5 and the cell 201.

Further, the heating element 5 is a heating film; and the heating film has a thickness dimension ranging from 0.13 mm to 0.5 mm.

Since the heating power is correlated with the thickness dimension of the heating film, a heating film with an appropriate thickness dimension should be selected on the basis of the required heating temperature.

Referring to FIGS. 13 and 11, in some embodiments of the present application, the heating element 5 includes an insulation coating layer 503, a heating core 504, an electrical connector 505, and a temperature switch 506. The heating core 504 is disposed within the insulation coating layer 503 and covered by the insulation coating layer 503. The heating core 504 includes an electrical connection end 5041. The electrical connector 505 is electrically connected to the electrical connection end 5041 and extends out of the insulation coating layer 503. The temperature switch 506 is connected to electrical connector 505. When a temperature is higher than a first set value, the temperature switch 506 is turned off, and the heating element 5 stops working and does not heat up; and when a temperature is lower than a second set value, the temperature switch 506 is turned on, and the heating element 5 starts to work and heats.

It should be noted that the insulation coating layer 503 is generally made of a PI covering film (polyimide) or a PET covering film (high-temperature resistant polyester), which is a soft and flexible insulation substrate that wraps around the heating core 504 to achieve isolation and insulation protection.

The heating core 504 has two electrical connection ends 5041, namely, a positive electrical connection end and a negative electrical connection end. Correspondingly, two electrical connectors 505 are provided, namely, a positive electrical connector and a negative electrical connector. The insulation coating layer 503 has a clearance hole which is at a position opposite the electrical connection end 5041, allowing the positive electrical connector to be electrically connected to the positive electrical connection end and the negative electrical connector to be electrically connected to the negative electrical connection end, so as to supply heating current to the heating core 504 via the positive electrical connector and the negative electrical connector.

The heating core 504 includes a plurality of heating portions that supply heat. The plurality of heating portions are arranged in a one-to-one correspondence with the plurality of heating zones 501. The connection zones 502 are regions that do not supply heat, but traces need to be arranged within the connection zones 502 to connect the plurality of heating portions in series.

It should be noted that the temperature switch is composed of a thermally conductive plastic housing, a bimetallic element soldered with silver alloy contacts, a conductive bracket, an insulation mounting base, a stationary contact plate, a heat-resistant wire, and other elements. During flowing of current through the bimetallic element with impedance, when abnormal operation occurs, as the current increases or the ambient temperature rises to the first set value, the bimetallic element quickly activates, the silver alloy contacts open to disconnect from the stationary contact plate, so that the charging circuit of the heating element 5 is disconnected. When the ambient temperature cools down to the second set value, the silver alloy contacts of the bimetallic element automatically close to connect with the stationary contact plate, so that the charging circuit of the heating element 5 is connected to restore the normal operating state, achieving a thermal protection for the battery pack. Further, the second set value of temperature is within a safe operating temperature range of the battery pack.

The provision of the temperature switch 506 enables the temperature of the battery pack during charging and discharging to be controlled within the suitable operating range of the battery pack, that is, between the second set value and the first set value, thereby improving the electrical performance, safety, and life of the battery pack.

Further, the first set value is greater than the second set value; the first set value does not exceed 60°C; and the second set value is not lower than 15°C.

Preferably, the first set value is 60°C; and the second set value is 15°C. That is, the suitable operating temperature range of the battery pack during charging and discharging is from 15°C to 60°C.

Referring to FIG. 11, in some embodiments of the present application, the electrical connection end 5041 is formed in the connection zone 502.

Since the electrical connection end 5041 of the heating core 504 is formed in the connection zone 502, the electrical connection module of the folded heating element 5 can be integrated at the end portion of the heating element 5 and located outside the folding space. This not only facilitates connection with an external power source, but also does not interfere with the folding of the heating element 5 and does not affect the close fit between the heating zone 501 and the surface of the cells 201. Moreover, this will not occupy the area of the heating portion of the heating core 504, ensuring the comprehensive and uniform heating effect of the heating zone 501 on the cells 201.

Preferably, starting from the starting end of the folded heating element 5, the first of the connection zones 502 of the heating film is a first connection zone; and both electrical connection ends 5041 of the heating core 504 are formed in the first connection zone.

In some embodiments of the present application, the heating core 504 is a heating resistance wire.

Referring to FIG. 13, it should be noted that only one heating resistance wire is used in the heating film in the present application. Both a start end and a finish end of the heating resistance wire are electrical connection ends 5041.

The start end of the heating resistance wire is fixed in the first connection zone; then the heating resistance wire is folded and arranged in different heating portions in sequence, and the finish end of the heating resistance wire can ultimately return to and be fixed in the first connection zone; and the fixing position of the start end of the heating resistance wire is opposite the fixing position of the finish end of the heating resistance wire.

The heating resistance wire is generally made of SUS304 (stainless steel), copper, or an alloy material. On the basis of the electrothermal efficiency formula P = RI^2 and the formula of the law of resistance R = ρL/S, where ρ is a resistivity of a material used to make the heating resistance wire, L is a length of the heating resistance wire, and S is a cross-sectional area of the heating resistance wire, when it is desired to increase the heating temperature of the heating zone 501, the cross-sectional area of the heating resistance wire can be reduced. Therefore, the heating temperature of the heating zone 501 can be controlled by means of adjusting the cross-sectional area of the heating resistance wire, so that the heating temperature of the heating element 5 on the battery cell module 2 can be evenly distributed.

In some embodiments, the electrical connector 505 is a connecting wire.

It should be noted that the connecting wire is generally made of an extra-soft silicone wire which is soft and easy to assemble and weld with the electrical connection end 5041 of the heating core 504.

Further, the electrical connector 505 may also be replaced with an FPC connecting board. The FPC connecting board is electrically connected to the control circuit board 7 to connect to an external circuit via the control circuit board 7, so as to supply heating current to the heating core 504.

In some embodiments, an insulation protective layer is provided at a connection between the electrical connector 505 and the electrical connection end 5041. A first insulation protective layer is provided at a welding point between the positive connecting wire and the start end of the heating resistance wire; and a second insulation protective layer is provided at a welding point between the negative connecting wire and the finish end of the heating resistance wire.

This can prevent short circuit between two adjacent electrical connectors 505, that is, between the positive connecting wire and the negative connecting wire.

Further, insulation adhesive is applied to an electrical connection point between the electrical connector 505 and the electrical connection end 5041; and the insulation adhesive cures to form an insulation protective layer.

Referring to FIG. 11, it should be noted that a width dimension of the heating zone 501 is A; a width dimension of the connection zone 502 is B; and a length dimension of the heating element 5, a length dimension of the heating zone 501, and a length dimension of the connection zone 502 are all C.

The length dimension C of the heating zone 501 does not exceed the length dimension of the cell 201; and the width dimension A of the heating zone 501 does not exceed the width dimension of the cell 201.

Further, the width dimension B of the connection zone 502 is greater than or equal to the sum of the thickness dimensions of all cells 201 and all battery cell isolation foams 202 that can be accommodated within the folding space.

This can ensure that the heating element 5 is sized to not extend beyond the edge of the cell 201, ensuring the energy density of the battery pack. Moreover, this can ensure that the number of the folding spaces formed by the folded heating element 5 exactly matches with the number of cells 201 that need to be accommodated, thereby ensuring the assembly fitness between the heating element 5 and the cells 201.

In some embodiments of the present application, the heating zones 501 in the heating element 5 are different in heat generation power. Since the battery cell module 2 is composed of a plurality of cells 201 disposed in a stack, the cells 201 in the middle receives more heat than the cells 201 on both sides. To ensure uniform heat distribution, it is designed that the heat generation power is not uniform in different heating zones 501 of the heating element 5. In general, the heating power of the heating zones 501 at both ends of the heating element 5 is greater than the heating power of the heating zone 501 in the middle region of the heating element 5.

It should be noted that the heating element 5 includes six heating zones 501 arranged at intervals. The sum of heating power of the heating zones 501 at both ends of the heating element 5 is E; and the sum of heating power of the four heating zones 501 in the middle region of the heating element 5 is F. Therefore, the heating power E/2 of the heating zone 501 on the edge side of the heating element 5 is larger, and the heating power F/4 of the heating zone 501 in the middle region of the heating element 5 is smaller.

The connection zone 502 does not need to heat the cell 201, but traces need to be arranged within this region to connect the plurality of adjacent heating zones 501 in series. The heat generation power of the traces arranged in each connection zone 502 is G; and G is controlled so that it satisfies G = E/2-F/4.

Three thermally conductive connectors 4 are provided. According to the assembly sequence, the three thermally conductive connectors 4 are respectively a first thermally conductive connector 4011, a second thermally conductive connector 4012, and a third thermally conductive connector 4013.

A heating element 5 having six heating zones 501 is provided. According to the assembly sequence, the heating element 5 sequentially includes a first heating zone 5011, a first connection zone 5021, a second heating zone 5012, a second connection zone 5022, a third heating zone 5013, a third connection zone 5023, a fourth heating zone 5014, a fourth connection zone 5024, a fifth heating zone 5015, a fifth connection zone 5025, and a sixth heating zone 5016.

The aforementioned thermally conductive connectors 4 and the heating element 5 are assembled with twelve cells 201. According to the assembly sequence, the twelve cells 201 are a first cell 2011, a second cell 2012, a third cell 2013, a fourth cell 2014, a fifth cell 2015, a sixth cell 2016, a seventh cell 2017, an eighth cell 2018, a ninth cell 2019, a tenth cell 20110, an eleventh cell 20111, and a twelfth cell 20112.

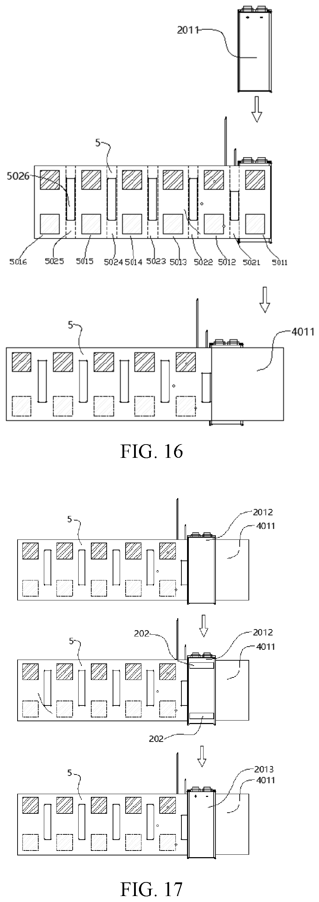

Referring to FIGS. 16 to 25, the aforementioned three thermally conductive connectors 4 and the heating elements 5 are assembled with the twelve cells 201 in steps as follows.

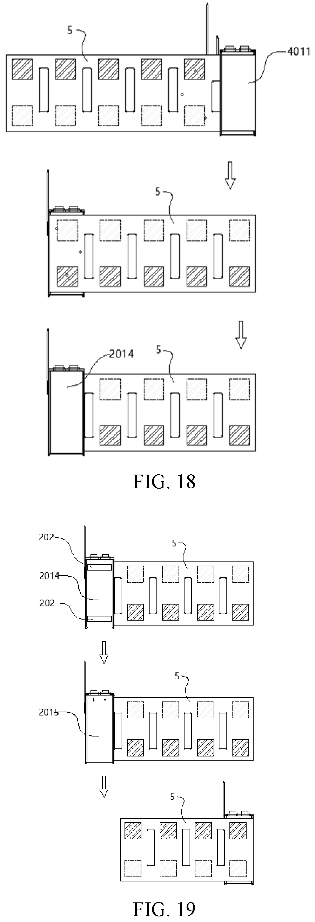

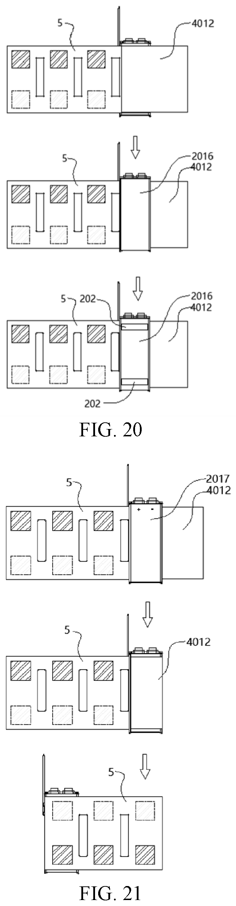

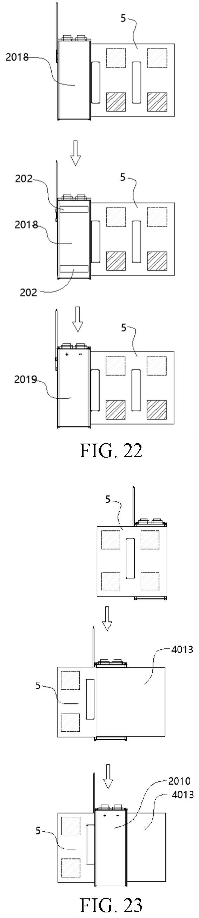

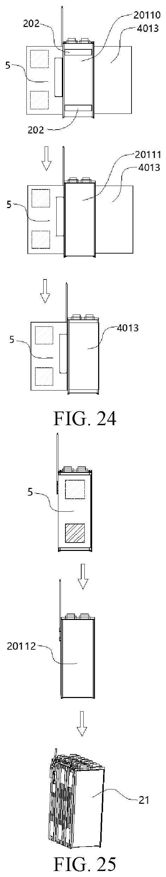

At step 1, the first cell 2011 is positioned and placed on an assembly fixture. At step 2, a first positioning hole 5017 in the heating element 5 (as shown in FIG. 11) is aligned with a positioning point in the assembly fixture, and a back side of the first heating zone 5011 is bonded to the first cell 2011. At step 3, a first portion 402 of the first thermally conductive connector 4011 is bonded to a front side of the first heating zone 5011 (steps 1 to 3, as shown in FIG. 16). At step 4, the second cell 2012 is stacked on the first portion 402 of the first thermally conductive connector 4011. At step 5, battery cell isolation foam 202 is attached to a surface of the second cell 2012. At step 6, the third cell 2013 is stacked (steps 4 to 6, as shown in FIG. 17). At step 7, two fold lines of an abutting portion 401 of the first thermally conductive connector 4011 are folded in sequence so that a second portion 403 of the first thermally conductive connector 4011 is folded back onto a surface of the third cell 2013. At step 8, two fold lines of the first connection zone 5021 are folded in sequence so that the heating element 5 is folded back onto a surface of the second portion 403 of the first thermally conductive connector 4011, at which time a front side of the second heating zone 5012 is bonded to the surface of the second portion 403 of the first thermally conductive connector 4011. At step 9, the fourth cell 2014 is stacked on a back side of the second heating zone 5012 (steps 7 to 9, as shown in FIG. 18). At step 10, battery cell isolation foam 202 is attached to a surface of the fourth cell 2014. At step 11, the fifth cell 2015 is stacked. At step 12, two fold lines of the second connection zone 5022 are folded in sequence so that the heating element 5 is folded back onto a surface of the fifth cells 2015, at which time a back side of the third heating zone 5013 is bonded to the fifth cell 2015 (steps 10 to 12, as shown in FIG. 19). At step 13, a first portion 402 of the second thermally conductive connector 4012 is bonded to a front side of the third heating zone 5013. At step 14, the sixth cells 2016 is stacked on the first portion 402 of the second thermally conductive connector 4012. At step 15, battery cell isolation foam 202 is attached to a surface of the sixth cell 2016 (steps 13 to 15, as shown in FIG. 20). At step 16, the seventh cell 2017 is stacked. At step 17, two fold lines of an abutting portion 401 of the second thermally conductive connector 4012 are folded in sequence so that a second portion 403 of the second thermally conductive connector 4012 is folded back onto a surface of the seventh cell 2017. At step 18, two fold lines of the third connection zone 5023 are folded in sequence so that the heating element 5 is folded back onto a surface of the second portion 403 of the second thermally conductive connector 4012, at which time a front side of the fourth heating zone 5014 is bonded to a surface of the second portion 403 of the second thermally conductive connector 4012 (steps 16 to 18, as shown in FIG. 21). At step 19, the eighth cell 2018 is stacked on a back side of the fourth heating zone 5014. At step 20, battery cell isolation foam 202 is attached to a surface of the eighth cell 2018. At step 21, the ninth cell 2019 is stacked (steps 19 to 21, as shown in FIG. 22). At step 22, two fold lines of the fourth connection zone 5024 are folded in sequence so that the heating element 5 is folded back onto a surface of the ninth cells 2019, at which time a back side of the fifth heating zone 5015 is bonded to the ninth cells 2019. At step 23, a first portion 402 of the third thermally conductive connector 4013 is bonded to a front side of the fifth heating zone 5015. At step 24, the tenth cell 20110 is stacked on the first portion 402 of the third thermally conductive connector 4013 (steps 22 to 24, as shown in FIG. 23). At step 25, battery cell isolation foam 202 is attached to a surface of the tenth cell 20110. At step 26, the eleventh cell 20111 is stacked. At step 27, two fold lines of an abutting portion 401 of the third thermally conductive connector 4013 are folded in sequence so that a second portion 403 of the third thermally conductive connector 4013 is folded back onto a surface of the eleventh cell 20111 (steps 25 to 27, as shown in FIG. 24). At step 28, two fold lines of the fifth connection zone 5025 are folded in sequence so that the heating element 5 is folded back onto a surface of the second portion 403 of the third thermally conductive connector 4013, at which time a front side of the sixth heating zone 5016 is bonded to the surface of the second portion 403 of the third thermally conductive connector 4013. At step 29, the twelfth cell 20112 is stacked on a back side of the sixth heating zone 5016, thus completing the assembly of the heating element 5 with the twelve cells 201 (steps 28 and 29, as shown in FIG. 25).

Through the above assembly steps, a battery pack core unit semi-finished product 21 of an overall structure is obtained by the battery cell module 2 fitting with the three folded thermally conductive connectors 4 and the folded heating element 5.

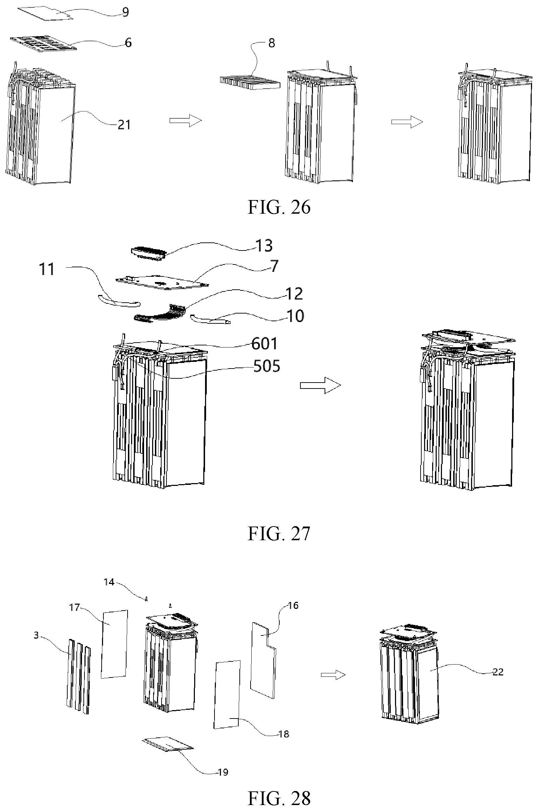

Referring to FIGS. 26, 27 and 30, in some embodiments of the present application, the battery pack includes a tab welding plate 6. The tab welding plate 6 is located above the battery cell module 2. A guide hole 601 is formed in the tab welding plate 6. The electrical connector 505 of the heating element 5 passes through the guide hole 601.

It should be noted that the tab welding plate 6 has tab lead-out holes arranged at intervals. A welding land is formed between adjacent tab lead-out holes. A nickel brick is provided on the welding land.

After the heating element 5 is assembled with the cells 201 to obtain the battery pack core unit semi-finished product 21, the tab welding plate 6 is disposed above the battery pack core unit semi-finished product 21 (i.e., above the battery cell module 2). Tabs in the battery cell module 2 are respectively passed through the tab lead-out holes of the tab welding plate 6; and then the tabs are flattened, and are aligned with and connected, by means of laser or resistance welding, the nickel bricks on the welding lands of the tab welding plate 6.

The electrical connector 505 on the heating element 5 is passed through the guide hole 601, so as to fix the outward extension of the electrical connector 505.

Further, an insulation sheet 9 is attached to the tab welding plate 6. The insulation sheet 9 is provided to prevent the risk of short circuit caused by the contact between the tab welding point and other objects.

Tab isolation foam 8 is provided. The tab isolation foam 8 is inserted into gaps between adjacent tabs in the plurality of cells 201. The tab isolation foam 8 is located at the bottom of the tab welding plate 6. By providing the tab isolation foam 8, on the one hand, the tabs can be isolated to prevent the risk of short circuit caused by the contact between the tabs due to external vibration or other reasons; and on the other hand, the tab isolation foam 8 can support the tab welding plate 6, which prevents the risk of short circuit caused by the contact between the tab welding plate 6 and the cells 201, and also enhances the overall fixing effect.

Referring to FIGS. 27 and 30, in some embodiments of the present application, the battery pack includes a control circuit board 7. The electrical connector 505 of the heating element 5 is electrically connected to the control circuit board 7.

It should be noted that the tab welding plate 6 is welded and connected to the control circuit board 7 via a signal cable 12, which serves to collect and feedback operating condition information of the battery cell module 2.

The electrical connector 505 is electrically connected to the control circuit board 7, which avoids the need for complex and lengthy connection lines on the heating element 5 to connect to an external circuit. Through the control circuit board 7, an electrical conduction between the electrical connector 505 and the external circuits can be established to supply power to the heating element 5.

Further, a positive wire 10 and negative wire 11 are welded to the tab welding plate 6. The positive wire 10 is welded to a positive welding position of the tab welding plate 6, and the negative wire 11 is welded to a negative welding position of the tab welding plate 6. The purpose is to enable normal charge and discharge of the battery cell module 2.

A connector terminal 13 is welded onto the control circuit board 7 to serve as a port for external connection.

Referring to FIGS. 28 and 30, a protective assembly is provided on an outer surface of the battery cell module 2. The protective assembly is an auxiliary foam assembly attached to the outer surface of the battery cell module 2. The auxiliary foam assembly includes a rear auxiliary foam 16, a left auxiliary foam 17, a right auxiliary foam 18, and a bottom auxiliary foam 19. The provision of the protective assembly can prevent the aforementioned assembled component from being punctured or scratched by the lower housing 1 when mounted into the lower housing 1, and also achieves a buffering and shock absorption effect and can thus prevent the risk of the battery cell module 2 being punctured or scratched by the lower housing 1 when the battery pack is subjected to external vibration.

Further, a notch is formed in an upper left corner of the rear auxiliary foam 16 for the placement of the temperature switch above the heating element 5. The temperature switch is located on a side portion of the battery cell module 2, and the rear auxiliary foam 16 has a thickness so that the temperature switch can be protected from the compression by the lower housing 1.

A control circuit board screw 14 is mounted onto the control circuit board 7; and finally, the thermally conductive flexible member 3 is fitted into the lower housing 1, with the thermally conductive flexible member 3 being aligned with the abutting portion 401 of the thermally conductive connector 4, thus completing the assembly of the battery pack core unit 22.

The above description is only an embodiment of the present application. The battery pack core unit 22 placed inside the battery pack according to the present application may have various changes and variations.

Referring to FIGS. 29 and 30, the control circuit board 7 is fastened and connected to the upper housing 20 by means of the control circuit board screws 14, thus achieving a reliable connection between the control circuit board 7 and the upper housing 20. The completed battery pack core unit is inserted into the lower housing 1, and the connector terminal screws 15 are then passed through the upper housing 20. The connector terminal 13 is fastened and connected to the upper housing 20 by means of the connector terminal screws 15, thus achieving a reliable fixation of the connector terminal 13 onto the upper housing 20. Finally, the upper housing 20 is placed on the lower housing 1 in a covering manner and connected by laser welding, ultrasonic welding, gluing, etc. Then, the assembly of the entire battery pack is completed.

The components and devices involved in the present application are merely illustrative examples and are not intended to require or imply that they must be connected, arranged, or configured in the manner shown in the accompanying drawings. As will be appreciated by those skilled in the art, these components and devices can be connected, arranged, and configured in any manner. Words such as "include", "comprise", "have", etc., are open-ended words that mean "include but is not limited to" and can be used interchangeably therewith. The words "or" and "and" as used herein refer to the words "and/or" and can be used interchangeably therewith unless the context clearly indicates otherwise. The word "such as" as used here refers to the phrase "such as, but not limited to" and can be used interchangeably therewith.

It should also be noted that in the device of the present application, the components can be decomposed and/or recombined. These decompositions and/or recombinations are to be regarded as equivalent solutions of the present application.

The above description of the disclosed aspects is provided to enable any person skilled in the art to make or use the present application. Various modifications to these aspects are readily apparent to a person skilled in the art, and the general principles defined herein may be applied to other aspects without departing from the scope of the present application. Therefore, the present application is not intended to be limited to the aspects shown herein, but to be in the broadest scope consistent with the principles and novel features disclosed herein.

The above description has been given for purposes of illustration and description. In addition, this description is not intended to limit the embodiments of the present application to the form disclosed herein. While various example aspects and embodiments have been discussed above, those skilled in the art will recognize certain variations, modifications, alterations, additions and sub-combinations thereof.

The above descriptions are merely preferred embodiments of the present application but not intended to limit the present application, and any modifications, equivalent replacements, etc. made within the spirit and principle of the present application shall fall within the scope of protection of the present application.

## Claims

1. A battery pack, **characterized by** comprising:
a lower housing (1), formed with a heat dissipation portion (101);
a battery cell module (2), disposed inside the lower housing (1);
a thermally conductive assembly, comprising a thermally conductive flexible member (3), wherein the thermally conductive flexible member (3) is thermally conductively connected to the battery cell module (2) and abuts against the heat dissipation portion (101).

2. The battery pack according to claim 1, **characterized in that** the battery cell module (2) comprises a plurality of cells (201) arranged in sequence, and the thermally conductive assembly further comprises a thermally conductive connector (4) wrapping around each of the plurality of cells (201); and
the thermally conductive connector (4) comprises an abutting portion (401), wherein the abutting portion (401) is parallel to a direction in which the cells (201) are arranged in sequence, and the thermally conductive flexible member (3) is disposed between the abutting portion (401) and the heat dissipation portion (101) and abuts against each of the abutting portion (401) and the heat dissipation portion (101).

3. The battery pack according to claim 2, **characterized in that** the thermally conductive connector (4) comprises a first portion (402), the abutting portion (401), and a second portion (403) which are integrally connected,
the first portion (402) and the second portion (403) are perpendicular to the direction in which the cells (201) are arranged in sequence; and
the first portion (402), the abutting portion (401), and the second portion (403) enclose an accommodating space, and the cell (201) is disposed in the accommodating space.

4. The battery pack according to claim 3, **characterized in that**
a first thermally conductive adhesive layer (404) is provided on each of the first portion (402) and the second portion (403);
and/or
the thermally conductive connector (4) is a graphite sheet, and the graphite sheet has a thickness dimension ranging from 0.1 mm to 1.0 mm.

5. The battery pack according to any one of claims 2 to 4, **characterized in that** the thermally conductive flexible member (3) comprises a thermally conductive coating layer (301) and a thermally conductive flexible core (302) disposed inside the thermally conductive coating layer (301).

6. The battery pack according to claim 5, **characterized in that**
a second thermally conductive adhesive layer (303) is provided on a side of the thermally conductive coating layer (301) opposite the abutting portion (401);
and/or
the thermally conductive coating layer (301) is a graphite sheet coating layer, and the thermally conductive flexible core (302) is thermally conductive foam;
and/or
the thermally conductive flexible core (302) is circumferentially coated with a third thermally conductive adhesive layer, and the thermally conductive coating layer (301) is bonded to the third thermally conductive adhesive layer.

7. The battery pack according to any one of claims 1 to 6, **characterized in that**
a mounting opening (102) is formed in a side wall of the lower housing (1), a heat sink is provided at the mounting opening (102), and the heat sink forms the heat dissipation portion (101);
and/or
the heat dissipation portion (101) comprises a body (1011) and a plurality of heat dissipation fins (1012) arranged in sequence on the body (1011).

8. The battery pack according to claim 7, **characterized in that**
the body (1011) has a thickness dimension along a direction in which the plurality of heat dissipation fins (1012) extend outward relative to the body (1011), and the thickness dimension of the body (1011) is greater than 1.2 mm;
and/or
each of the plurality of heat dissipation fins (1012) has a thickness dimension along a direction in which the plurality of heat dissipation fins (1012) are arranged in sequence, and the thickness dimension of the heat dissipation fin (1012) gradually decreases along a direction in which the heat dissipation fin (1012) extends outward relative to the body (1011);
and/or
an end portion of each of the plurality of heat dissipation fins (1012) away from the body (1011) is arc-shaped, with an arc angle ranging from 5° to 8°;
and/or
each of the plurality of heat dissipation fins (1012) has a thickness dimension along the direction in which the plurality of heat dissipation fins (1012) are arranged in sequence, and the thickness dimension of the heat dissipation fin (1012) is greater than 1.5 mm;
and/or
a spacing between adjacent heat dissipation fins (1012) of the plurality of heat dissipation fins (1012) is greater than 4 mm along the direction in which the plurality of heat dissipation fins (1012) are arranged in sequence.

9. The battery pack according to any one of claims 1 to 8, **characterized in that** the battery cell module (2) comprises a plurality of cells (201) arranged in a stack;
the battery pack comprises a heating element (5), wherein the heating element (5) forms a plurality of folding spaces along a direction in which the plurality of cells (201) are arranged in sequence; and
the plurality of cells (201) are arranged in the plurality of folding spaces.

10. The battery pack according to claim 9, **characterized in that** the heating element (5) comprises a plurality of heating zones (501) arranged at intervals and a connection zone (502) located between two adjacent heating zones (501); and
the plurality of heating zones (501) are arranged in sequence along the direction in which the plurality of cells (201) are arranged, and the connection zone (502) is parallel to the direction in which the plurality of cells (201) are arranged;
wherein edges of the connection zone (502) adjacent to the plurality of heating zones (501) are fold lines, a through hole (5026) is formed in the heating element (5), and the fold lines are located at edges of the through hole (5026) or extend through the through holes (5026).

11. The battery pack according to claim 10, **characterized in that**
corners of the through hole (5026) are chamfered;
and/or
adhesive members (507) are provided on both a front side and a back side of each of the plurality of heating zones (501);
and/or
each of the plurality of heating zones (501) comprises a first end and a second end along a length direction of each of the plurality of cells (201), and adhesive members (507) are respectively provided near the first end and near the second end of the heating zone (501), with a spacing therebetween;
and/or
a first positioning hole (5017) is formed in the heating element (5);
and/or
the heating element (5) is a heating film having a thickness dimension ranging from 0.13 mm to 0.5 mm.

12. The battery pack according to claim 10 or 11, **characterized in that** the heating element (5) comprises:
an insulation coating layer (503);
a heating core (504) disposed within the insulation coating layer (503) and comprising an electrical connection end (5041);
an electrical connector (505) electrically connected to the electrical connection end (5041); and
a temperature switch (506) connected to the electrical connector (505), wherein when a temperature is higher than a first set value, the temperature switch (506) is turned off, and the heating element (5) stops heating; and when the temperature is lower than a second set value, the temperature switch (506) is turned on, and the heating element (5) heats.

13. The battery pack according to claim 12, **characterized in that**
the heating core (504) is a heating resistance wire;
and/or
the electrical connection end (5041) is formed in the connection zone (502);
and/or
the electrical connector (505) is a connecting wire;
and/or
an insulation protective layer is provided at a connection between the electrical connector (505) and the electrical connection end (5041).

14. The battery pack according to claim 12 or 13, **characterized in that**
the battery pack comprises a tab welding plate (6), wherein the tab welding plate (6) is located above the battery cell module (2), a guide hole (601) is formed in the tab welding plate (6), and the electrical connector (505) passes through the guide hole (601);
and/or
the battery pack comprises a control circuit board (7), wherein the electrical connector (505) is electrically connected to the control circuit board (7).

15. The battery pack according to any one of claims 10 to 14, **characterized in that** the through hole (5026) is formed in the connection zone (502), and a width of the through hole (5026) is the same as a width of the connection zone (502) along a direction in which the plurality of heating zones (501) are arranged at intervals; or a region in which the through hole (5026) is formed extends beyond the connection zone (502), and two edges of the through hole (5026) are respectively located in two heating zones (501) adjacent to the connection zone (502).
